# EUROPEAN PATENT SPECIFICATION

(11) **EP 4 644 712 B1**
(45) Date of publication and mention of the grant of the patent: **25.11.2026**
(21) Application number: 25165579.1
(22) Date of filing: 24.03.2025
(51) Int. Cl.: F16B 37/04, F16B 39/22, F16B 39/34

(54) **CONNECTION SYSTEM OF A SLIDING FASTENING ELEMENT ON A SURFACE WITH ELASTIC MEANS**
VERBINDUNGSSYSTEM EINES VERSCHIEBBAREN BEFESTIGUNGSELEMENTS AUF EINER OBERFLÄCHE MIT ELASTISCHEN MITTELN
SYSTÈME DE LIAISON D'UN ÉLÉMENT DE FIXATION COULISSANT SUR UNE SURFACE AVEC DES MOYENS ÉLASTIQUES

(30) Priority: 30.04.2024 IT 202400001843 U
(43) Date of publication of application: 05.11.2025
(73) Proprietor: Specialinsert S.r.l., 10136 Torino (IT)
(72) Inventor: Pioggia, Franco, 10136 Torino (IT); Amerio, Roberto, 10136 Torino (IT)
(74) Representative: Garavelli, Paolo

(56) References cited:
- GB-A- 713 523
- US-A- 3 061 455
- US-A- 3 259 164
- US-A1- 2019 032 697

## Description

The present invention relates to a system for connecting a sliding fastening element on a surface with elastic means.

In general, the present invention relates to devices for screwing fasteners into surfaces, e.g. plates, slabs or releasable devices.

In particular, the present invention relates to devices for screwing fasteners to overcome positioning errors within the tolerance of the sliding surface.

The state of the art is represented by Italian patent document TO2014A001071 /102014902318222 concerning a mechanical fastening organ called "olivetta", commonly known in English as "anchor nut".

Furthermore, the state of the art represented by US 20140283363 A1 relates to a method and apparatus for fastening structures using nut plates, particularly in the presence of composite structures. One proposed solution involves the use of nut plates that are held in place by rivets. However, the use of rivets may be undesirable due to the need to form additional holes in the composite structure, increasing the risk of inconsistency and requiring more time and equipment. Furthermore, the use of rivets may increase the weight of the structure more than desired and may not provide the desired spacing between the fasteners.

In an illustrative example, an apparatus comprises a body and a flange. The body has a channel extending from one end to the other, with a circular cross-section to receive a first fastener (such as a screw), while the outer surface of the body has a non-circular cross-section. The flange is associated with the opposite end and is configured to receive a second fastener (such as a washer).

In the context of a production environment, this technology can be used to connect structures within an aircraft wing, reducing the need for access to certain sides of the structure and mitigating the risk of inconsistency when at least one of the structures is composed of composite materials. The non-circular shape of the body of the threaded plates matches the shape of specific holes in the structure, reducing the rotational movement of the plates within the holes and minimizing uncertainties in the assembly process.

The fastening method illustrated involves placing one end of the body into a hole on one side of the frames, placing a nut element on the flange at the other end of the body, and sliding a screw through the channel towards the nut element on the flange, then tightening the screw and nut element to secure the frames together.

Furthermore, the patent illustrates the use of different materials for the body and flange, such as metal, plastic, steel, aluminum, titanium, copper, polycarbonate or composite.

Furthermore, the state of the art is represented by US 11053966 B2 regarding an assembly designed to support a fastening, particularly suitable for use in aircraft, although not limited to them. The assembly comprises a barrier that forms at least a part of a structure on which the fastening is installed and a connecting member that includes a supporting surface and two flanges, a first and a second, extending from the supporting surface. The first flange and the second flange are perpendicular to each other.

The coupling element is designed to rotate from a first angular position to a second angular position based on the contact between the first flange and the fastener and the torque applied to the fastener. In essence, when the coupling element is in its first angular position, the second flange is separated from the barrier by a gap. However, when the coupling element is rotated to its second angular position, the second flange contacts the barrier and prevents rotation of the fastener.

Furthermore, the state of the art is represented by US 20140056665 A1 concerning a cage nut. The cage nut comprises a cage with an opening, inside which a nut body consisting of an enlarged flange and a hollow shoulder with an internal thread is movably accommodated. Between the nut body and the cage a spacer element is positioned, which includes at least one spring element effective perpendicular to the axial direction of the internal thread. The nut body is movable relative to the cage against the spring force of the spring element.

The spacer element consists of two rings arranged coaxially one inside the other, with at least one spring element connecting them. An inner ring surrounds the hollow shoulder of the nut body, while an outer ring is supported on the cage. The spacer element may be made of electrically insulating material, such as plastic, and is preferably produced by injection molding. The spring elements consist of thin strips bent into a V, with the edge of the bend parallel to the axial direction of the internal thread.

The inner ring of the spacer element extends deeper into the cage than other parts of the element. It is secured to the hollow shoulder of the nut body by three punch marks evenly spaced around the periphery of the hollow shoulder. Between the inner ring and the punch marks there is a lock washer that has a larger outside diameter than the outer ring.

The state of the art is also represented by US 20230400051 A1 which relates to a particular floating nut fastening assembly, comprising: a nut, provided with a threaded hole; and a limiting support, configured to be detachably connected to a base to form between the limiting support and the base a limiting space to accommodate the nut; wherein one of the limiting supports and the nut is provided with at least two projections, and the other is provided with at least two locating holes; the projections are in one-to-one correspondence with the locating holes; the projection is inserted into the locating hole; and the projection is in free fit and/or in elastic fit with the locating hole.

The protrusion is elastically connected to the positioning hole, and the protrusion is configured to be elastically deformable in the radial direction.

The at least two protrusions are spaced around an axis of the nut.

A part of the protrusion in contact with the positioning hole is made of an elastic material.

The projection is in free connection with the locating hole; the projection passes through the locating hole; and an end portion of the projection is provided with a spring plug, where the spring plug is configured to prevent the projection from falling out of the locating hole along an axial direction of the locating hole.

The spring plug fits around the protrusion, and an outer peripheral surface of the spring plug includes a first guiding slope and a second guiding slope, where the first guiding slope is arranged opposite to the second guiding slope along the axial direction of the locating hole.

The end portion of the protrusion and/or an end portion of the locating hole is provided with a guide portion to guide the protrusion into the locating hole.

The limiting support comprises a support body and a connecting arm, where the support body is configured to form the limiting space with the base, and the connecting arm is configured to be detachably connected to the base.

One end of the connecting arm is connected to the supporting body, and a projection of the connecting arm does not overlap a projection of the supporting body in a plane perpendicular to an axial direction of the threaded hole.

The nut comprises a nut body and a flange, where the threaded hole is arranged in the nut body; the flange is formed on an outer peripheral surface of the nut body; the support body is provided with a through hole corresponding to the nut body; the support body fits around the nut body through the through hole; the flange is limited in the limiting space; the protrusion is arranged on the support body; and the locating hole is arranged on the flange.

The connecting arm is supplied in a quantity of at least two, and the two connecting arms are spaced around a through-hole axis.

A clearance portion to avoid the connecting arm is formed on the flange.

The nut body is in free connection with the through hole.

The state of the art presents a series of improvements that can be introduced in a new floating fastening system. For example:
- the use of modular components that can be assembled and customized to meet specific application needs, allowing for greater flexibility and adaptability of fastening;
- the integration of elastic elements and adjustable locking mechanisms, to allow users to compensate and adjust any positional and nonpositional errors to meet specific requirements;
- compatibility with a wide range of materials and structural geometries, enabling the secure fastening of components made of composite materials, metals or other materials;
- the use of advanced locking mechanisms and suitable elastic elements to ensure a secure fixing that remains stable even under conditions of vibration or dynamic loads;
- ease of installation and disassembly, reducing the time and effort required for the assembly and maintenance of the structures.

In particular, from the descriptions provided in the state of the art, several characteristics emerge that involve elastic deformability, such as:
- cage nut with spring element, described in US 20140056665 A1, comprising a spring element effective perpendicular to the axial direction of the internal thread, allowing the body of the nut to be movable relative to the cage against the spring force of the element;
- spring projection in the floating nut, described in US 20230400051 A1, which mentions a spring projection that is configured to be elastically deformable in the radial direction, allowing the projection to fit into the locating hole and be securely retained.

US-A1-2019/032697 discloses a connection system.

Object of the present invention is solving the above-mentioned prior art problems by providing a connection system of a sliding fastening element on a surface with elastic means that allows the use of modular components.

A further object is providing a system for connecting a sliding fastening element to a surface with elastic means which allows the integration of elastic elements and adjustable locking mechanisms.

A further object is providing a system for connecting a sliding fastener to a surface by elastic means that allows compatibility with a wide range of materials and structural geometries.

A further object is providing a system for connecting a sliding fastener to a surface by elastic means which allows the use of advanced locking mechanisms and suitable elastic elements to ensure a secure fastening which remains stable even under conditions of vibration or dynamic loads.

A further object is providing a system of connection of a sliding fastener on a surface with elastic means which allows ease of installation and disassembly.

The above and other objects and advantages of the invention, as will result from the following description, are achieved with a system for connecting a sliding fastening element on a surface with elastic means, such as that described in claim 1.

It is understood that the attached claim forms an integral part of this description.

It will be immediately obvious that countless variations and modifications can be made to what is described (for example relating to shape, dimensions, arrangements and parts with equivalent functionality) without departing from the scope of the invention as appears from the attached claim

The present invention will be better described by some preferred embodiments thereof, provided by way of example and not of limitation, with reference to the attached drawings, in which:
- FIG. 1 shows a perspective view of a first embodiment called "wire spring hook", of the connection system of a sliding fastening element on a surface with elastic means, not part of the present invention;
- FIG. 2 shows a perspective view of a second embodiment called "elastic band attachment", of the connection system of a sliding fastening element on a surface with elastic means, not part of the present invention;
- FIG. 3 shows a perspective view of a third embodiment called "wire spring snap-on coupling", of the connection system of a sliding fastening element on a surface with elastic means, not part of the present invention;
- FIG. 4 shows a perspective view of a fourth embodiment called "welded or glued attachment", of the connection system of a sliding fastening element on a surface with elastic means, not part of the present invention;
- FIG. 5 shows a perspective view of a fifth embodiment called "riveted attachment", of the connection system of a sliding fastening element on a surface with elastic means, not part of the present invention; and
- FIG. 6 to 11 show an embodiment of the connection system of a sliding fastening element on a surface with elastic means, according to the present invention.

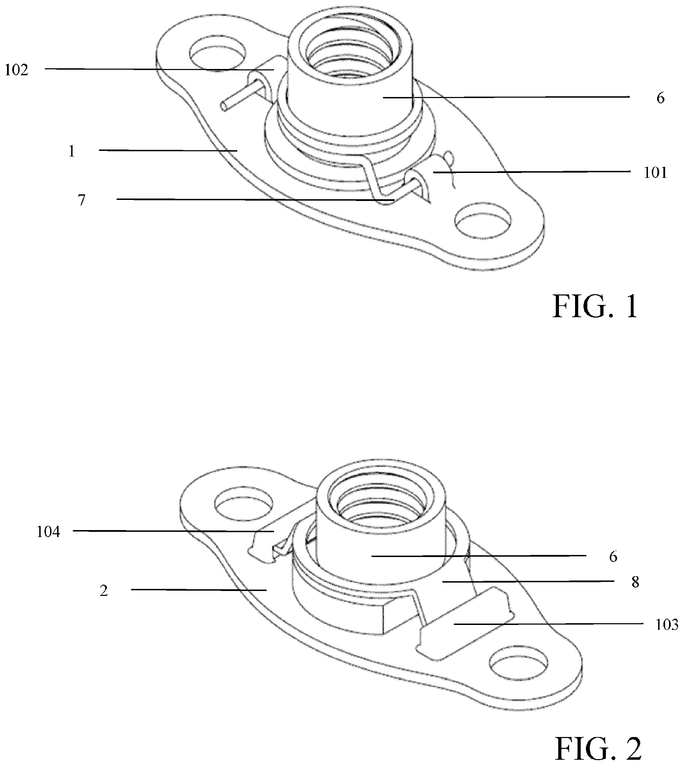

Referring to FIG. 1 to 5, it is possible to note that a connection system of a sliding fastening element on a surface with elastic means is constituted by a plate or base 1, 2, 3, 4, 5, a fastening element 6 sliding on a portion of the surface of the plate 1, 2, 3, 4, 5, and elastic means 7, 8, 9, 10, 11 provided to keep the connection of the fastening element 6 with the plate 1, 2, 3, 4, 5 floating.

Advantageously, the elastic means 7, 8, 9, 10, 11, shaped to contain the fastening element 6, comprise a pair of fixing appendages suitable for being operatively connected to the plate 1, 2, 3, 4, 5.

Referring to FIG. 1, it can be noted that the plate 1 is provided with a pair of perforated sleeves 101, 102, each perforated sleeve of the pair of perforated sleeves 101, 102 being provided to receive the respective fixing appendage of the elastic means 7.

These elastic means 7 preferably consist of a wire spring.

Referring to FIG. 2, it can be noted that the plate 2 is equipped with a pair of slotted blocks 103, 104, each slotted block of the pair of slotted blocks 103, 104 being designed to receive the respective fixing appendix of the elastic means 8.

These elastic means 8 preferably consist of an elastic band.

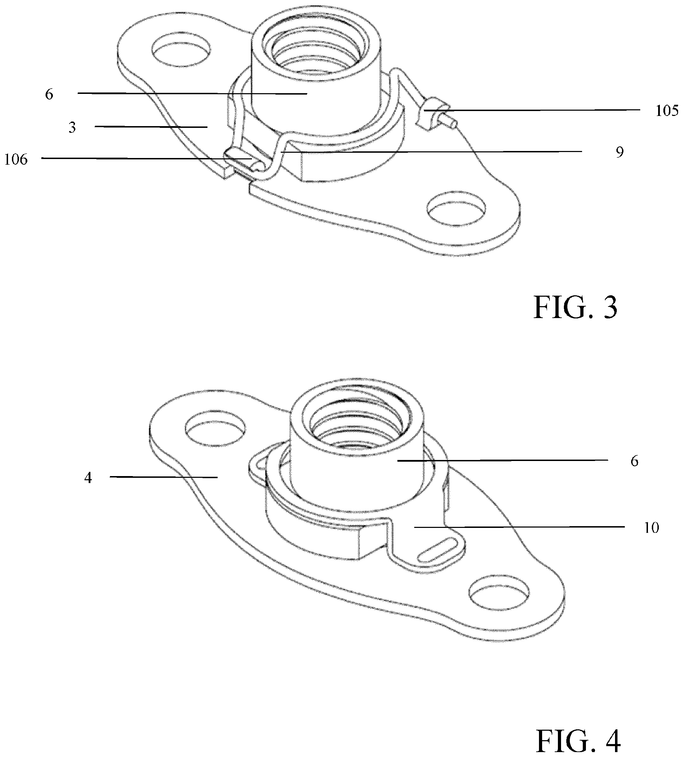

Referring to FIG. 3, it can be noted that the plate 3 is provided with a pair of hooks 105, 106, each hook of the pair of hooks 105, 106 being provided to receive the respective fixing appendix of the elastic means 9.

These elastic means 9 preferably consist of a snap-action wire spring.

Referring to FIG. 4, it is possible to note that the plate 4 is designed to receive the respective fixing appendix of the elastic means 10 by welding or other connection systems.

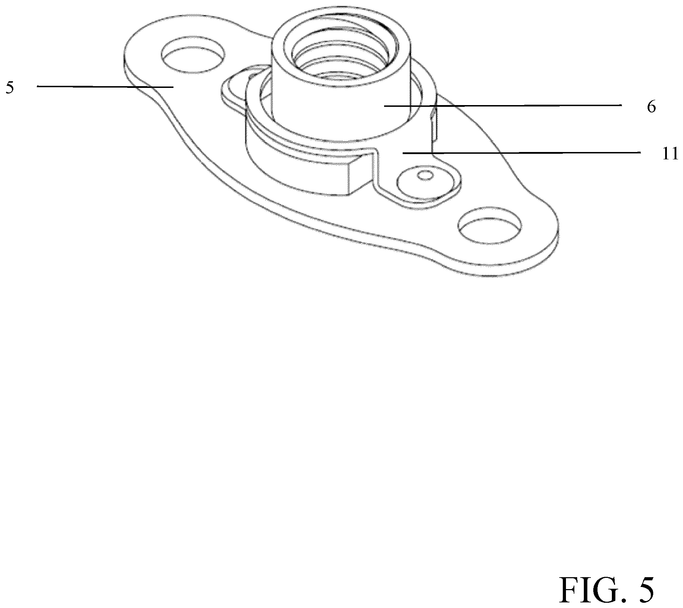

Referring to FIG. 5, it is possible to note that the plate 5 is designed to receive the respective fixing appendix of the elastic means 11 by means of riveting or other connection systems.

In a common configuration, the fastening element 6 is preferably a bushing.

In a further widespread configuration, the bushing of the fastening element 6 preferably comprises a thread.

In particular, the fastening element 6 may be provided with a thread with a self-locking portion, such self-locking portion being, for example, obtained through the use of adhesive substances or by mechanical deformation such as, for example, ovalization of the thread portion.

The floating fastening system, used in particular in the aeronautical sector, therefore refers to a fastening element consisting, in a preferred configuration, of a floating threaded bushing, contained within a dedicated base plate. This threaded bushing is designed to be mobile, allowing slight differences in positioning that are absorbed thanks to its ability to move within the plate.

An alternative solution to such a floating fastening system allows the threaded bushing to be surrounded by a metal band or wire. This new configuration allows the threaded bushing to move axially, eliminating the folds on the plate as occurs using the prior art system.

The fastening element represented by the threaded bushing can take on any shape, profile and internal or external thread characteristics, or even be smooth.

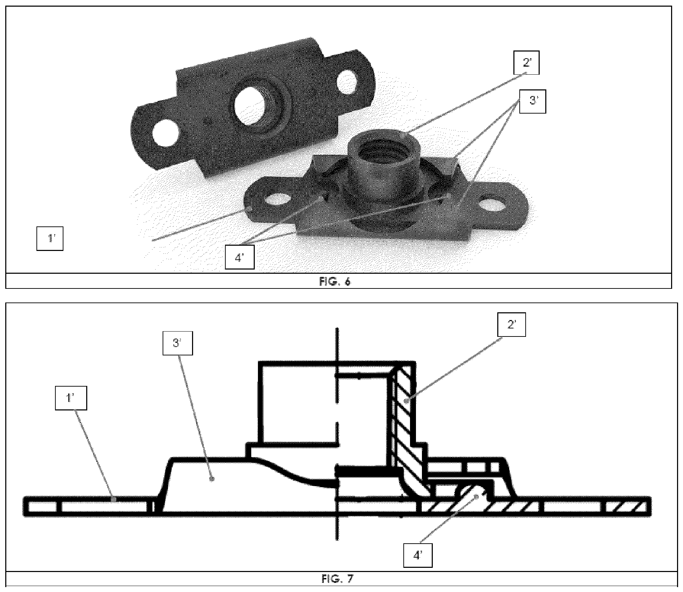

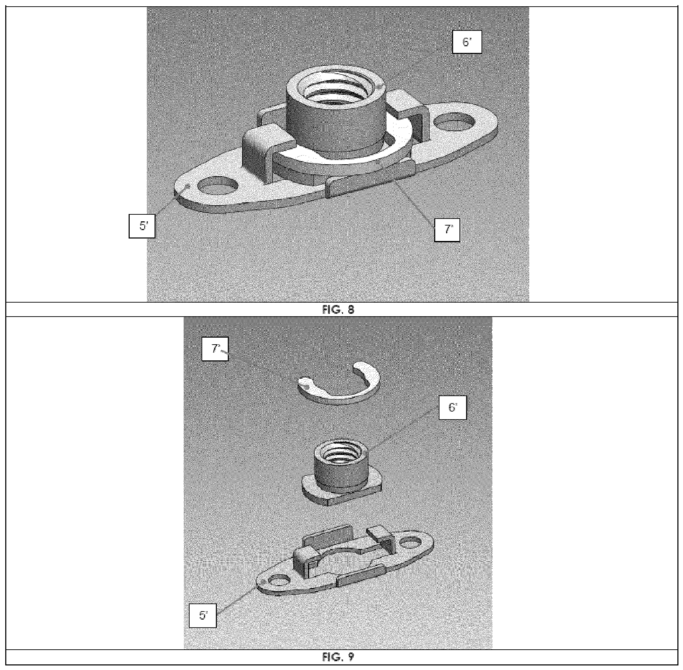

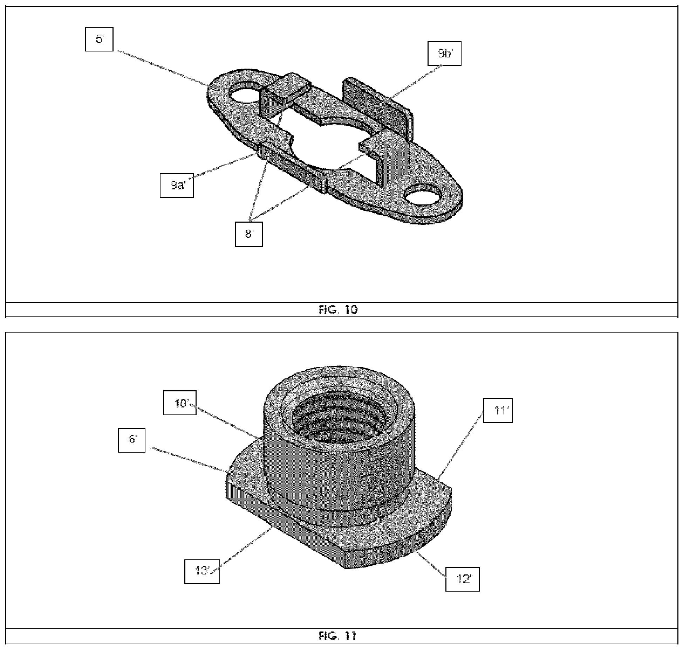

With reference to FIG. 6 to 11, a further preferred embodiment of the connection system of a sliding fastening element on a surface with elastic means according to the present invention will now be described.

In this embodiment, the floating connection system is a device for screwing fasteners into surfaces, such as plates, slabs, etc. This device is movable within a certain range of travel, to avoid positioning errors between the elements to be connected.

It generally consists of:
- a plate or base 1' made of sheet metal, suitably shaped, which has an internal housing with a space delimited on an axis by the folds 3' of the sheet metal itself and by bosses 4' obtained on its flat face. The folds 3' also limit the space of the internal housing, along an axis perpendicular to the full face of the base 1'.
- a threaded metal bushing 2', inserted, with play, inside the internal housing of the base 1', whose characteristic is that of being able to move parallel to the plane of the base in a range of positions delimited by the geometry of the housing itself. The internal thread of the bushing is equipped with a self-braking portion (obtained through the use of adhesive substances, or by mechanical deformation), so as to offer a constraint that can offer guarantees of resistance to vibrations.

The above describes alternative and improved systems for connecting, with play, the bushing 2' to the base 1', through the use of modular components that can be assembled and customized according to the specific needs of the application, allowing for greater flexibility and adaptability of the fastening.

This embodiment implements those described above, adding a further solution that further increases the ease of assembly of the system and above all offers the possibility of easily replacing the threaded bushing without completely removing the insert.

To do this, a third, removable element was added, consisting of an elastic ring 7' of an appropriate shape.

In more detail, for this new solution the fastening system is composed of:
- a plate or base 5' made of sheet metal, suitably shaped, which has an internal housing with a space delimited on a plane by the folds 8' of the sheet metal itself and by the lateral fins 9a', 9b' obtained on its flat part. The folds 8' also limit the space of the internal housing along an axis perpendicular to the full face of the base 5'. A peculiar characteristic of the fins 9a', 9b' is that one of the two 9a' is lower than the other 9b';
- a threaded metal bushing 6' inserted, with play, inside the internal housing of the base 5', whose characteristic is that it can move parallel to the plane of the base in a range of positions delimited by the geometry of the housing itself. The internal thread of the bushing is equipped with a self-braking portion (obtained through the use of adhesive substances, or by mechanical deformation), so as to offer a constraint that can offer guarantees of resistance to vibrations. Along the external surface of the cylindrical shaft 10' of the bushing, close to its head 11', a groove 12' is obtained which constitutes a seat and contains inside it an elastic ring 7'. Furthermore, the head 11' has a non-circular profile, with two parallel lateral millings 13'.

The way to assemble the system is very simple:
- the bushing 6' is inserted into the housing present in the base 5'. The head 11' has an adequate thickness to be able to pass through the space present between the fin 9a' and the folds 8'. Once inserted, the bushing can be placed on the bottom of the housing and its movement on the plane is limited by the fins 9a' and 9b' and by the folds 8';
- to prevent the bushing 6' from disengaging and lifting off the surface, the elastic ring 7' is snap-fitted into the groove 12'. Once in place, the elastic ring acts as a spacer between the head 11' of the bushing and the folds 8' of the base, preventing the bushing itself from lifting enough to be able to be removed by sliding over the fin 9a'.

At this point, the bushing 6' remains constrained with play in the housing of the base 5', maintaining the possibility of moving parallel to the flat face of the base itself, in the position range delimited by the mechanical stops 8', 9a' and 9b'. The particular asymmetrical configuration of the head 11', equipped with two parallel millings 13', prevents the bushing itself from rotating idly in its housing, an essential feature to make it possible to screw, for example, a screw into its internal thread.

As for the differences and advantages of this latter embodiment, they are:
- greater simplicity and speed of assembly. The 6' bushing can also be inserted with the 5' base already mounted on the receiving material (by screwing, riveting, gluing, etc.);
- greater simplicity and speed in any maintenance. If necessary, the 6' bushing can be removed and replaced. By removing the elastic ring, the head 11' of the 6' bushing can be removed from the housing of the 5' base by carrying out the operations illustrated above for assembly in reverse order. It is not necessary to disassemble the base from the surface of the receiving material, thus saving time and materials. This last feature is an important requirement, requested by the market, and a fundamental point of innovation of this new version.

Some embodiments of the invention have been described, but naturally they are susceptible to further modifications and variations within the scope of the same inventive idea, as defined in the appended claim.

## Claims

1. Connection system of a fastening element sliding on a surface with elastic means, consisting of a base 5'), a fastening element (6, 6') sliding on a portion of the surface of the base ( 5'), and elastic means (7, 8, 9, 10, 11, 7') provided to keep the connection of the fastening element (6, 6') floating with the base ( 5'), wherein the elastic means (7, 8, 9, 10, 11, 7') are shaped to contain the fastening element (6, 6') designed to move parallel to a plane of the base( 5') in a range of positions, an internal thread of the fastening element (6, 6') being equipped with a self-braking portion, wherein:
• the base (5') is made of sheet metal, which has an internal housing with a space delimited on a plane by folds (8') of the sheet metal itself and by lateral fins (9a', 9b') obtained on its flat part, the folds (8') also limiting the space of the internal housing along an axis perpendicular to the full face of the base (5'), one (9a') of the fins (9a', 9b') being lower than the other fin (9b'); and
• a threaded metal bushing (6') inserted, with play, inside the internal housing of the base (5'), designed to move parallel to the plane of the base in a range of positions delimited by the geometry of the housing itself, the internal thread of the bushing being equipped with a self-braking portion, along the external surface of the cylindrical shaft (10') of the bushing, close to its head (11'), a groove being obtained (12') which constitutes a seat and contains inside it an elastic ring (7'), the head (11') having a non-circular profile, with two parallel lateral millings (13').

## Patentansprüche

1. System zum Verbinden eines auf einer Oberfläche gleitenden Befestigungselements (6, 6') mit elastischen Mitteln, bestehend aus einer Basis (5'), einem auf einem Teil der Oberfläche der Basis (5') gleitenden Befestigungselement (6, 6') und elastischen Mitteln (7, 8, 9, 10, 11, 7'), die so angeordnet sind, dass sie die Verbindung des mit der Basis (5') beweglichen Befestigungselements (6, 6') aufrechterhalten, wobei die elastischen Mittel (7, 8, 9, 10, 11, 7') so geformt sind, dass sie das Befestigungselement (6, 6') aufnehmen, das sich parallel zu einer Ebene der Basis (5') in einem Positionsbereich bewegen kann, wobei das Innengewinde des Befestigungselements (6, 6') mit einem selbstsichernden Abschnitt versehen ist,
in dem:
• der Sockel (5') besteht aus Blech und weist ein inneres Gehäuse auf, dessen Raum in einer Ebene durch Falten (8') des Blechs selbst und durch seitliche Rippen (9a', 9b') auf dessen flachem Teil begrenzt wird, wobei die Falten (8') den Raum des inneren Gehäuses auch entlang einer Achse senkrecht zur vollen Fläche des Sockels (5') begrenzen, wobei eine Rippe (9a', 9b') niedriger ist als die andere Rippe (9b'); und
• eine Gewindebuchse (6'), die mit Spiel in das Grundgehäuse (5') eingesetzt ist und sich parallel zur Ebene des Grundgehäuses in einem durch die Geometrie des Gehäuses selbst begrenzten Positionsbereich bewegen kann, das Innengewinde der Buchse ist mit einem selbstbremsenden Abschnitt versehen, entlang der Außenfläche des zylindrischen Körpers (10') der Buchse, nahe ihrem Kopf (11'), entsteht eine Nut (12'), die als Sitz dient und einen elastischen Ring (7') aufnimmt, der Kopf (11') hat ein nicht-kreisförmiges Profil mit zwei parallelen seitlichen Fräsungen (13').

## Revendications

1. Système de liaison d'un élément de fixation (6, 6') coulissant sur une surface avec des moyens élastiques, comprenant une base (5'), un élément de fixation (6, 6') coulissant sur une partie de la surface de la base (5'), et des moyens élastiques (7, 8, 9, 10, 11, 7') agencés pour maintenir la liaison de l'élément de fixation (6, 6') flottant avec la base (5'), les moyens élastiques (7, 8, 9, 10, 11, 7') étant conçus pour contenir l'élément de fixation (6, 6') conçu pour se déplacer parallèlement à un plan de la base (5') dans une gamme de positions, un filetage intérieur de l'élément de fixation (6, 6') étant muni d'une partie autobloquante,
dans lequel:
• la base (5') est en tôle et comporte un logement interne dont l'espace est délimité sur un plan par des plis (8') de la tôle elle-même et par des ailettes latérales (9a', 9b') obtenues sur sa partie plane, les plis (8') délimitant également l'espace du logement interne le long d'un axe perpendiculaire à la face entière de la base (5'), l'une des ailettes (9a', 9b') étant plus basse que l'autre ailette (9b'); et
• une douille métallique filetée (6') insérée, avec jeu, à l'intérieur du boîtier de base (5') , configurée pour se déplacer parallèlement au plan de la base dans une plage de positions délimitée par la géométrie du boîtier lui-même, le filetage intérieur de la douille étant équipé d'une partie autobloquante, le long de la surface extérieure du corps cylindrique (10') de la douille, près de sa tête (11'), une rainure (12') étant obtenue qui constitue un siège et loge à l'intérieur un anneau élastique (7'), la tête (11') ayant un profil non circulaire, avec deux fraisages latéraux parallèles (13').
